# EUROPEAN PATENT SPECIFICATION

(11) **EP 3 735 687 B1**
(45) Date of publication and mention of the grant of the patent: **22.04.2026**
(21) Application number: 19736080.3
(22) Date of filing: 02.01.2019
(51) Int. Cl.: G10L 15/20, G10L 15/22, G10L 25/84, G06F 3/16

(54) **APPARATUS, SYSTEM AND METHOD FOR DIRECTING VOICE INPUT IN A CONTROLLING DEVICE**
EINRICHTUNG, SYSTEM UND VERFAHREN ZUR LEITUNG DER SPRACHEINGABE IN EINER STEUERUNGSVORRICHTUNG
APPAREIL, SYSTÈME ET PROCÉDÉ D'ORIENTATION D'ENTRÉE VOCALE DANS UN DISPOSITIF DE COMMANDE

(30) Priority: 03.01.2018 US 201815861298
(43) Date of publication of application: 11.11.2020
(73) Proprietor: Universal Electronics Inc., Scottsdale, AZ 85254 (US)
(72) Inventor: HATAMBEIKI, Arsham, San Francisco, California 94127 (US)
(74) Representative: Simmons & Simmons
(86) International application number: PCT/US2019/012050
(87) International publication number: WO 2019/136065

(56) References cited:
- EP-A1- 3 012 836
- EP-A1- 3 413 303
- WO-A1-2015/127194
- WO-A1-2015/149216
- JP-A- 2017 138 476
- US-A1- 2011 051 016
- US-A1- 2015 185 964
- US-A1- 2017 031 420
- US-A1- 2018 124 356
- US-B2- 7 080 014

## Description

### BACKGROUND

Dedicated remote controls capable of controlling the operation of consumer electronic devices for receiving voice input, via use of a keypress to activate a microphone, are well known in the art and are generally each capable of controlling the operation of one type of consumer electronic device. Such a dedicated remote control is intended to primarily control the functional operations of a consumer electronic device associated with a consumer brand name. For example, a dedicated Apple brand Siri remote control for an Apple TV brand video streamer can use voice input to control the operations for volume, play, pause, rewind, stop, etc. via use of proprietary communication protocols. These dedicated remotes typically only work with the associated product that they are bundled with and lack the capability to work with other voice controlled consumer electronic devices. JP 2017 138476 A discloses a virtual assistant controlling electronic devices generating noise in the speech input.

Therefore, it would be desirable to provide a controlling device that allows a user to use voice commands to control a plurality of different types of voice controlled consumer electronic devices from a plurality of consumer brand names.

### SUMMARY

The invention is defined by the independent claim 1.

A selection of optional features of the invention is set out in the dependent claims.

### BRIEF DESCRIPTION OF THE DRAWINGS

For a better understanding of the various aspects of the described systems and methods, reference may be had to the illustrative examples shown in the attached drawings in which:
Figure 1 is a block diagram illustrating a prior art system using a dedicated remote for providing voice data to a smart appliance.
Figure 2 is a block diagram illustrating a further system using a controlling device for providing formatted voice data to two or more smart appliances.
Figure 3 is an illustrative example of a still further system using a controlling device and an associated app for providing formatted voice data to two or more smart appliances.
Figure 4 is a functional block diagram of an example controlling device shown in Figure 2, for providing formatted voice data to two or more smart appliances.
Figure 5 is a functional block diagram of an example smart appliance as shown in Figure 2, used for providing formatted voice data to two or more smart appliances.
Figure 6 is a flow diagram illustrating an example method for enabling voice control of two or more smart appliances.
Figure 7 is a flow diagram illustrating an example method for controlling appliance generated sound levels in an environment in connection with receiving speech input.
Figure 8 is a flow diagram illustrating an example method for controlling device sound input based upon a received speech level.

### DETAILED DESCRIPTION

Described hereinafter are examples of an apparatus, a system and a method for controlling two or more smart appliances with voice commands and, more particularly, to a controlling device for receiving voice input from a user, for identifying a particular smart storage medium, which corresponds to the received wake-word and the predetermined wake-word and where the predetermined and received wake-words match. The processor then sends the voice command to the intended smart appliance via use of a communication interface. In some embodiments, the wake-word may be an alphanumeric consumer brand name, alphanumeric code, user dictation, etc. as needed for the particular application.

Another method is described for providing formatted voice data to two or more smart appliances, which is performed by a controlling device working in cooperation with a smart appliance. This method includes receiving, by a processor of the controlling device, via the microphone, a voice command from a user, transmitting, by the processor of the controlling device, via a communication interface, an HDMI input status request to a coupled smart appliance in response to receiving the voice command, receiving, by the processor of the smart appliance, via a communication interface of the smart appliance, the HDMI input status request whereupon the processor of the smart appliance is caused to detect an active HDMI input, the active HDMI input comprising a signal from an appliance presently being presented by the smart appliance, determine an appliance identification associated with the active HDMI input, send, via the communication interface of the smart appliance, the smart appliance identification to the controlling device at which point the processor of the controlling device receives, via the communication interface of the controlling device, the smart appliance identification and formats the voice command in accordance with a formatting protocol stored in an electronic storage medium of the controlling device associated with the appliance identification.

A system for providing formatted voice data to two or more smart appliances which is performed by a smart appliance in cooperation with a coupled remote server and a controlling device is also described. The system may include a smart appliance, having a processor readable code that causes the smart appliance to: receive a first voice command via a communication interface from a controlling device; format the voice command in conformance with a first formatting protocol; transmit, via the communication interface, the formatted voice command to a remote server where the processor of the remote server receives the formatted voice command, via a communication interface, and uses the voice command to determine a first appliance to which the first voice command is intended; receive a determination of a first appliance for which the voice command is intended from the remote server, via a communication interface, and to transmit, via the communication interface, the formatted voice command to the intended smart appliance.

A better understanding of the objects, advantages, features, properties and relationships of the subject systems and methods will be obtained from the following detailed description and accompanying drawings which set forth illustrative examples and which are indicative of the various ways in which the principles of the invention hereinafter claimed may be employed.

### BRIEF DESCRIPTION OF THE DRAWINGS

For a better understanding of the various aspects of the described systems and methods, reference may be had to the illustrative examples shown in the attached drawings in which:

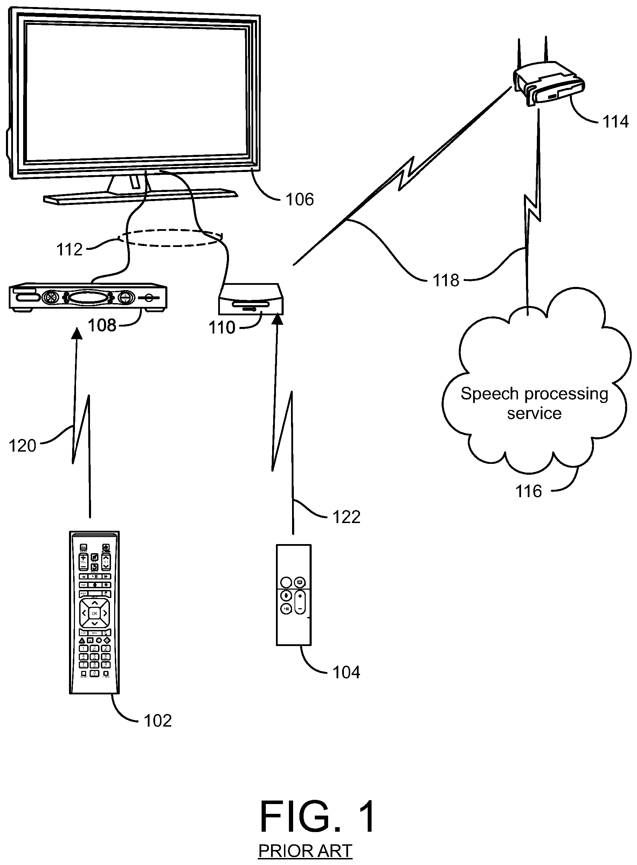

Figure 1 is a block diagram illustrating a prior art system using a dedicated remote for providing voice data to a smart appliance.

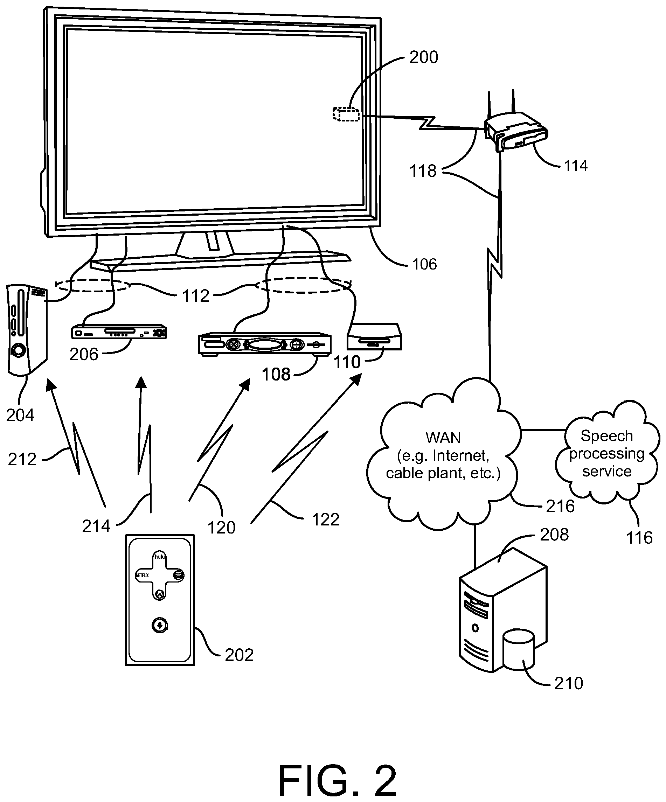

Figure **2** is a block diagram illustrating a further system using a controlling device for providing formatted voice data to two or more smart appliances.

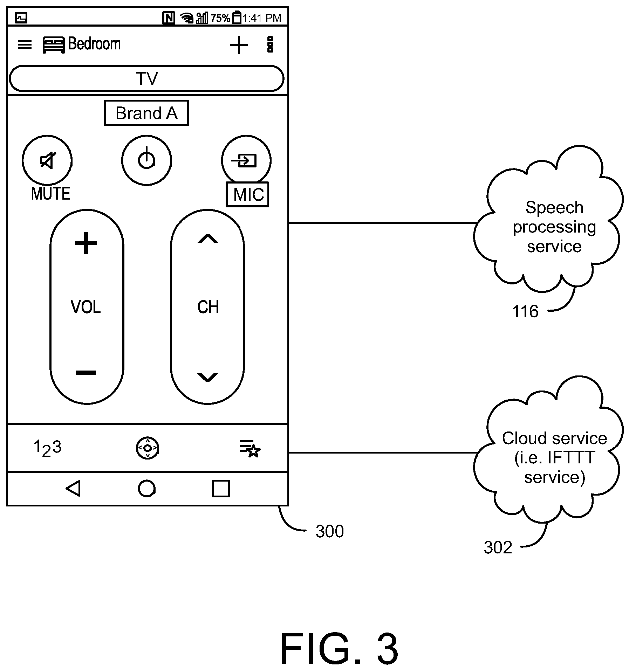

Figure **3** is an illustrative example of a still further system using a controlling device and an associated app for providing formatted voice data to two or more smart appliances.

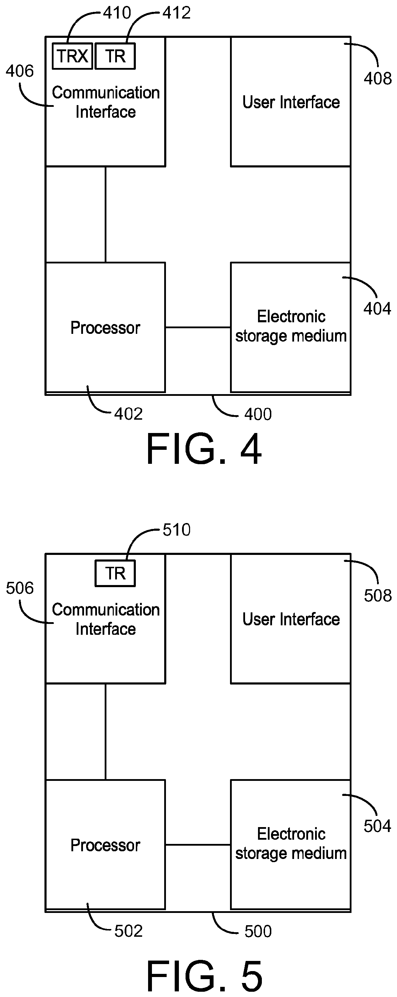

Figure **4** is a functional block diagram of an example controlling device shown in Figure **2****,** for providing formatted voice data to two or more smart appliances.
Figure **5** is a functional block diagram of an example smart appliance as shown in Figure **2****,** used for providing formatted voice data to two or more smart appliances.

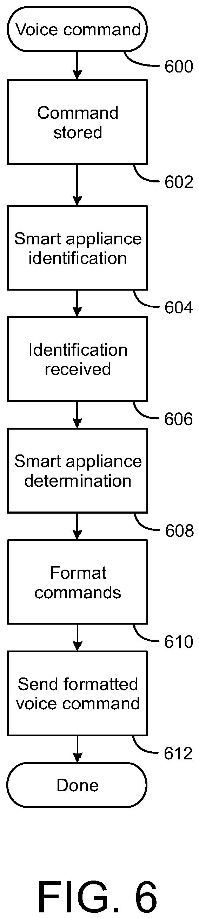

Figure **6** is a flow diagram illustrating an example method for enabling voice control of two or more smart appliances.

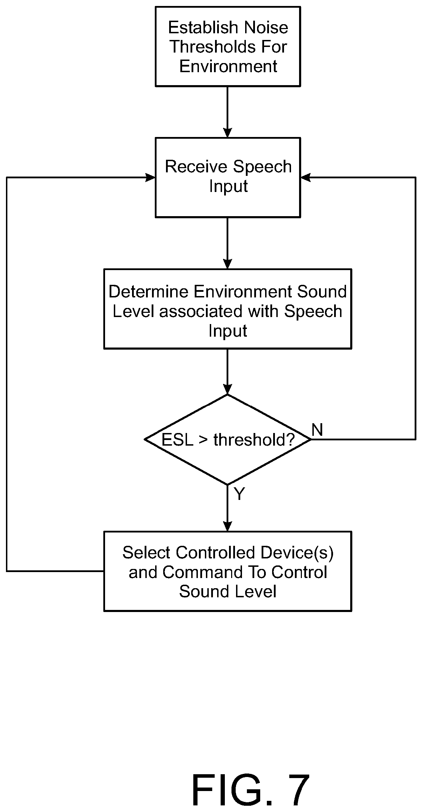

Figure 7 is a flow diagram illustrating an example method for controlling appliance generated sound levels in an environment in connection with receiving speech input.

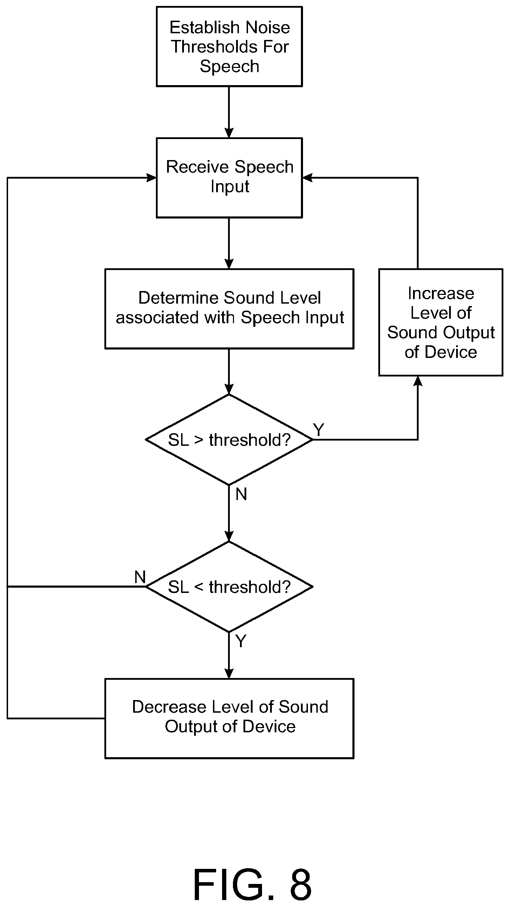

Figure 8 is a flow diagram illustrating an example method for controlling device sound input based upon a received speech level.

### DETAILED DESCRIPTION

Described hereinafter are examples of an apparatus, a system and a method for controlling two or more smart appliances with voice commands and, more particularly, to a controlling device for receiving voice input from a user, for identifying a particular smart appliance to which the voice input is intended, and for formatting the voice input into a digital signal understood by the particular smart appliance.

Figure **1** illustrates a system, known in the art, where a dedicated remote control is operated to primarily control the functional operations of a first smart appliance of the same consumer brand as the dedicated remote via use of voice commands and which is not purposed to communicate with or to control a second smart appliance of a different consumer brand via use of voice commands. This example illustrates two dedicated remote controls, a Comcast brand Xfinity voice remote **102** and an Apple brand Siri voice remote **104,** which are used to operate an associated smart appliance, such as a Comcast brand set-top-box **108,** (hereafter referred to as "STB") and an Apple TV brand streamer **110,** respectively, via use of voice commands. Some consumer devices are Internet-capable, i.e., they can send or receive content to and/or from sources located within range of a local data network, such as a wireless LAN, or sources located in remote locations via the Internet. Each dedicated remote communicates with an associated smart appliance via a wireless signal **120** and **122** respectively where wireless signals **120** and **122** are different from each other. Generally, the STB **108** and the Apple TV brand streamer **110** are connected to a smart TV **106,** (hereafter referred to as "TV"), via an HDMI cable **112,** and may also be connected to a wireless router **114,** and may use signal **118,** to communicate to an internet cloud based speech processing service **116,** such as the Comcast brand voice service provider or the Apple brand Siri voice service, for sending a voice command, received by the dedicated remote to the smart appliance, of the same brand, where the smart appliance sends the voice data to an associated speech processing service for interpretation. For example, a user of the Comcast brand Xfinity voice remote **102** presses the microphone key causing the remote to initiate recording the user's voice, such as "Watch ESPN" or "Show me kids movies," and the recording ends when the key is released. The remote then uses a voice-over RF4CE wireless protocol to compress and transmit the recording over a low bandwidth link to the STB **108.** The STB **108** then sends the recording to the Comcast brand voice service provider, via router **114,** to perform natural language processing (NLP) to interpret the recording, determine the corresponding command and then send the command back to STB **108** for performing the corresponding operation. In this embodiment, the Comcast brand Xfinity voice remote **102** does not support sending voice commands to a smart appliance of a different consumer brand, e.g., the Apple TV brand streamer 110. The operation of cloud based speech-processing services are well known by one skilled in the art and are not described herein.

Figure **2** illustrates an exemplary system in accordance with the teachings herein and includes a controlling device **202,** such as standalone Amazon brand Echo device, (hereafter referred to as "Echo") or to a similar type of device having voice input capabilities which types of devices may include, without limitation, a tablet, a PDA, a cell phone having an associated remote control type app, a smart watch, a computer, a wearable controlling device, a remote control, or an intermediary device purposed to control two or more smart appliances. In addition, it is contemplated that the controlling device 202 may be in the form of an intelligent digital assistant as described in U.S. Application No. 15/799,393, where the digital assistant would be supplemented with one or more of the functionalities described herein. As will be appreciated from the description that follows, the controlling device **202** is adapted to transmit one or more different wireless signals, such as signals **120, 122,** (as also shown in Figure 1), and/or signals **212** and **214,** for reception by a corresponding plurality of intended target devices. Such transmission may use communication protocols such as Voice over IP (VoIP), IP, Smart Wave (S-WAVE), Wi-Fi, Bluetooth low energy (BLE), RF4CE, ZigBee, Z-wave, Infra-red, 6LoWPAN, Thread, Wi-Fi-ah, 2G, 3G, 4G, NB-IoT, 5G, NFC, RFID, SigFox, etc., as needed to communicate commands to two or more smart appliances. In this embodiment, the controlling device **202** is configured to receive voice commands from a user and send formatted versions of the voice commands to a one or more of the smart appliances **108, 110, 204,** and **206** as determined by the controlling device **202.** In some embodiments, the voice commands are not formatted. It will also be appreciated that the controlling device **202** can be provisioned with conventional remote control functionality by which one or more commands selected from one or more command code sets can be transmitted to a controlled device to thereby control a functional operation, e.g., a volume operational function, a power operational function, etc., of the controlled device controlled device in addition to being provisioned with the capabilities to transmit formatted versions of the voice commands as described herein.

Smart appliances may comprise consumer electronic devices in an end user's home such, as TV **106,** STB **108,** an Apple TV brand streamer **110** (all as shown in Figure **1****),** an Xbox brand gaming system **204** and a Roku brand streamer **206.** While illustrated as a TV **106,** an Xbox brand gaming system **204,** STB **108,** a Roku brand streamer **206,** and an Apple TV brand streamer **110,** it is to be understood that smart appliances may include, but need not be limited to, various televisions, VCRs, DVRs, DVD players, cable or satellite converter set-top boxes, amplifiers, CD players, game consoles, home lighting, smart wireless hubs, drapery, fans, HVAC systems, personal computers, wearable health monitoring devices, or, generally, any consumer product capable of communicating with controlling type devices such as an Echo or smartphones, and/or other smart appliances, in some embodiments via use of a wireless router **114,** associated with a wireless signal **118** typically over a local-area network or a wide-area network **216.** Such smart appliances are generally connected to TV **106,** via HDMI cables **112** or may be connected wirelessly and may operate to send data to a coupled remote server **208,** coupled to database **210,** to a speech processing service **116,** as described in Figure **1****,** or both.

The controlling device **202,** may be operated by a user, by pressing a soft key or a mechanical key on the controlling device **202** that activates at least a coupled microphone, allowing a user's voice to be recorded and/or streamed and sent to one or more coupled smart appliances (individually and collectively referred to hereinafter as an "appliance"). In one embodiment, the controlling device **202,** may be part of an audio-based context recognition system, and in some embodiments, may be part of a contextual command routing system comprising at least one smart appliance coupled to server **208,** where the system determines the user's intent to perform an action and determines the intended smart appliance for routing the voice commands to said smart appliance for executing the command. In some embodiments, the determination of the user's intent is performed by a home entertainment system, comprising coupled sensing interfaces, for automating a system response to events which occur in a media viewing area, such as the user's living room. Such a determination of the user's intent may be performed as described in U.S. Patent No. 9,137,570.

In one example, the controlling device **202** may operate by continuously listening for audio-based context (i.e., context based on an audio signal originated by the user uttering a voice command) and sending, via a communication interface, the audio-based context, (hereafter referred to as "a voice command"), to a smart appliance which sends the voice command to a coupled server **208** where the server **208** automatically performs an audio-based context recognition operation such as to automatically determine the contextual command routing and/or determine at least part of a classification, for determining a smart appliance for which the audio-based context was intended.

In this example, a smart appliance, such as TV **106,** coupled to server **208,** receives the intended appliance determination information directly from server **208,** via a first communication interface (e.g., a Wi-Fi receiver), and uses the intended appliance determination information to determine the smart appliance for which the voice command was intended. TV **106** sends, the voice commands to the identified smart appliance, via a second communication interface (e.g., an RF4CE transmitter), for executing the commands (e.g., to turn on, turn off, volume up, volume down, change channel to channel X, etc.).

In another example, the controlling device **202,** receives the intended appliance determination information from server **208,** via a first communication interface, and sends the voice commands to the identified smart appliance, via a second communication interface, where the smart appliance executes the commands.

In yet another example, server **208** not only determines the intended appliance determination information, but also determines the user's intent for determining the contextual command routing. Then, the command itself is transmitted to either the intended smart appliance via wide-area network **216,** to controller **202,** or to a smart appliance that forwarded the voice command.

In one example, a first smart appliance receives the intended appliance determination information from server **208,** via a first communication interface, uses the appliance determination information to determine the intended smart appliance and sends the commands to the intended smart appliance for executing the commands.

In one example, a first smart appliance receives the intended appliance determination information from server **208** for locally executing the commands.

In another example, a first smart appliance may scan the local-area network for connected smart appliances and may query each smart appliance for state information for determining the intended appliance determination information and for sending the commands to the intended smart appliance.

In another example, a first smart appliance receives the intended appliance determination information from server **208** and sends the appliance determination information to a second smart appliance, where the second smart appliance uses the identification information to determine the identified smart appliance and sends the voice commands to the identified smart appliance, via a second communication interface for executing the commands.

In one example, the smart appliance sends the voice command to an associated speech processing service provider to perform natural language processing or similar processing, to determine the corresponding command which is then sent to the smart appliance for performing the command operation.

In one example, the controlling device **202** records and/or streams, via a communication interface, to a smart appliance, a wake-word, such as "TV", "Google", "Alexa", "Xbox", "Game" or "STB", and a command such as "Turn on", "Play", "Stop", etc. The wake-word is generally purposed to identify a smart appliance and in some embodiments to change a smart appliances power state such as from stand-by to full power. In one example, the controlling device **202,** uses the wake-word to determine which smart appliance to send the wake-word to and in one example, a command that is received by controlling device **202** just after receipt of the wake-word.

In another example, the controlling device **202** sends the wake-word and the command to the server **208,** via the wide-area network **216** where the smart appliance identification is determined by the processor of server **208** and where the server **208** sends the voice command to that smart appliance.

In another example, the controlling device **202** receives an identification of an intended smart appliance from a smart appliance coupled to the controlling device **202** where the identification of the intended smart appliance includes an associated wake-word and the controlling device **202** stores the information in the electronic storage medium. The controlling device **202** then receives at least a wake-word from a user and uses the wake-word to determine an intended smart appliance which to send the wake-word, or a voice command associated with a smart appliance associated with the wake-word.

As an example, controlling device **202** may send at least the wake-word to TV **106.** TV **106** uses the wake-word to determine a smart appliance identification associated with the received wake-word. The smart appliance identification is used by TV **106** to determine the corresponding smart appliance for which the wake-word is intended. The TV **106** then sends the wake-word and associated voice command to the identified smart appliance for execution of the command.

In another example, a smart appliance, in a cooperative operation with the controlling device **202** and server **208,** is configured in a provisioning process to enroll each smart appliance, located in the user's home and detected by the smart appliance, using a predetermined voice command that is spoken by the user during the provisioning process, such as a learning operation, and which associates a voice command with a smart appliance which supports that voice command. For example, a user, via use of the controlling device **202,** may utter a predetermined voice command, such as "Play music," "Pause movie," "Start recording," etc. In this embodiment, the controlling device **202** sends the voice command to the smart appliance for provisioning, where the smart appliance, via use of database **210** accessible by server **208,** receives instructions corresponding to the voice command and an identify for the intended smart appliance for the command from server **208.**

For example, the voice command "Play music" may be associated by server **208,** with a smart appliance that supports streaming music, such as a detected Apple TV brand streamer **110.** Similarly, the voice command "Pause movie" may be associated by the server **208** with a Roku brand streamer **206** and "Start recording" may be associated with STB **108.** Thereafter, when the user utters the voice command "Play music," via use of the controlling device **202,** the provisioned smart appliance causes the Apple TV brand streamer **110** to perform an operation to stream music.

In yet another example, the controlling device **202** receives a voice command, which automatically causes an input status request, such as a request to detect an active source/sink port, a request for status of a communications bus, etc. to be sent by the controlling device **202** to TV **106** where TV **106** performs an operation to detect an active input, from a number of possible inputs, to determine an associated appliance identification selected from a plurality of appliance identifications stored in the electronic storage medium of TV **106.** TV **106** then uses the appliance identification to send the voice command to the identified smart appliance.

In one example, the controlling device **202** receives configuration information from TV **106,** coupled to a remote server **208,** using an identification of a smart appliance from a plurality of coupled smart appliances which are located in an end user's home. In this example, the configuration information comprises a plurality of smart appliance profiles (hereafter referred to as "device profiles") which are provisioned to TV **106** by server **208.** For example, server **208** receives an identification of a plurality of smart appliances, located at an end user's home, from TV **106** where TV **106** performs an operation to detect other connected smart appliances and provisions that information to the remote server **208.** The server **208,** in turn, analyzes the information to determine a device profile for each of the detected smart appliances. The server **208** stores the device profile for each of the detected smart appliances in a database **210** and sends the device profile for each of the detected smart appliances to TV **106,** where TV **106** then sends the configuration to the controlling device **202.** The controlling device **202,** may receive configuration information from coupled TV **106,** comprising a Universal Control Engine **200,** (hereafter referred to as "UCE") via a provisioning process which is described in further examples below.

Furthermore, any of the smart appliances, shown in Figure **2****,** may operate in a cooperative operation such as by having any smart appliance act as a master device and the server **208** act as a slave device or vice versa, for the purpose of sending one or more device profiles to the controlling device **202** or to another coupled smart appliance. The device profiles may be stored locally in the electronic storage medium associated with controlling device **202** or in the electronic storage medium of a smart appliance.

It is to be understood that, while the user's voice command is described as a recording, the voice command may be streamed, in real time, by the controlling device **202,** may be partially streamed or may be temporarily stored in an electronic storage medium of the controlling device **202.** Furthermore, while a determination operation is described as a cross-referencing operation it is understood that other methods may be performed by server **208** to determine a relationship, such as using a predetermined operations map, using an index, using a pairing table and may use one or more of the methods.

Figure **3** is an example of a system using the controlling device **202,** having an associated control app and coupled to a server **208,** for providing voice commands to two or more smart appliances. Control type apps, (hereafter referred to as "apps"), are well known in the art and are not described herein. In this embodiment, controlling device **202,** via use of an app having an appropriate app interface **300** may initiate an operation where the controlling device **202,** may determine to which smart appliance each voice command is directed, may format voice commands in accordance with a smart appliance to which the voice command is intended, and may determine a transmission technology to transmit formatted voice commands to the intended smart appliance. For example, a user may press a soft key on the user interface provided to the controlling device **202** that activates a microphone of the controlling device **202.** Then, the user may utter a voice command, which is received by controlling device **202** and then processed to determine to which smart appliance the voice command is intended. Next, the voice command is formatted into a digital signal that is understood by the determined smart appliance. As will also be appreciated, activation of a volume control key, channel control key, or power key on the controlling device **202** depicted in Fig. 3may result in the transmission of a conventional remote control command to a controlled appliance to cause the controlled appliance, e.g., the TV, to perform a corresponding functional operation, e.g., to mute its sound.

In one example the app, via use of the associated microphone, may listen for a voice command and when the voice command is received, the app sends a request to a smart appliance to perform a local operation to dynamically scan the local-area network for connected smart appliances, query each smart appliance for state information, such as the media content currently available on a particular smart appliance, supported commands, etc. For example, TV **106** may initiate a query to one or more smart appliances such as STB **108** and Apple TV brand streamer **110** where each smart appliance sends, in real-time, information to TV **106,** related to what activity is being performed on each smart appliance. Such activity information may comprise available current media content such as a TV show or movie being watched on the Apple TV brand streamer **110,** photos being viewed, active apps and their displayed content on STB **108,** current volume level being used, supported commands, and may include information such as an identification of a last user action or command that was performed by each smart appliance. In some examples, the activity information may be displayed partly or in full on a display coupled to the smart appliance or may be provisioned by a first smart appliance to a second smart appliance, for displaying the information.

In another example, the activity information may be displayed in a display coupled to the controlling device **202,** where the activity information contains activable links which, when activated by a user via use of an app installed on controlling device **202,** cause the smart appliance to perform the corresponding command such as "Play," "Stop," etc.

In one example, determination of a smart appliance to which the voice command is intended is performed by a speech processing service **116** or by a cloud server **302** after the controlling device **202** transmits the voice command to a dedicated smart appliance tasked to relay the voice command from the controlling device **202** to such a speech processing service or cloud service. The identification and/or other information of a smart appliance that the voice command was intended to command is then received back at the smart appliance whereupon the identification and/or other information is provided to the app. Alternatively, the app may send voice commands directly to a speech processing service **116,** or to an associated cloud service **302,** directly via wireless router **114** or via use of a cellular network, eliminating the need for a smart appliance to relay this information to/from a remote server. The speech processing service **116** or cloud service **302** may then send information/instructions directly back to the controlling device **202.**

In one example, the app may comprise instructions which may be used to provision the cloud service **302,** such as If This Then That (hereafter referred to as "IFTTT") type instructions, for automating one or more predefined IFTTT operations which cause the one or more predefined operations to be sent by the IFTTT service to one or more smart appliances, such as TV **106,** which are coupled, via UCE **200,** to the IFTTT service. Similarly, such operations may be prepopulated at the cloud service **302** via use of the work flow tools or may be populated by the app to the IFTTT service during a set up operation.

In one example, the app continuously or at a predetermined time interval sends a request to a smart appliance to scan the local-area network for connected smart appliances and query each smart appliance for state information.

It is to be understood that while described as a stand-alone app, one or more coupled apps, which may be installed on one or more smart appliances, may cooperate to provision the controlling device **202,** the cloud service **302** or TV **106** for providing formatted voice commands to two or more smart appliances. Furthermore, one or more apps may cooperate to respond to a request, to scan the local-area network for connected smart appliances and query each smart appliance for state information, originated by a smart appliance or by a controlling device **202.** In some examples, the apps may be synched via use of a set up agent program resident in a smart appliance or in the controlling device **202.** Further details may be found in U.S. application Ser. No. 14/277,968.

Figure **4** illustrates a functional block diagram **400** of one example of a controlling device for providing formatted voice commands to two or more smart appliances, such as the controlling device **202** shown in Figure **2****.** The controlling device **202,** in this example, comprises a processor **402,** an electronic storage medium **404,** a communication interface **406,** a user interface **408,** at least one transceiver **410** and at least one transmitter **412.**

The processor **402** may be configured to provide general operation of the controlling device by executing processor-executable instructions stored in the electronic storage medium **404,** for example, executable code. The processor **402** typically comprises a general-purpose microprocessor, although any one of a variety of microprocessors, microcomputers and or microcontrollers may be used alternatively, chosen based on factors such as computing power, cost, size, etc.

The electronic storage medium **404** comprises one or more information storage devices such as ROM, RAM, Flash, other type of electronic, optical or mechanical electronic storage medium device, or any combination thereof. Electronic storage medium **404** may be used to store processor-executable instructions for operation of the controlling device **202.** It will also be appreciated that some or all of the illustrated electronic storage medium may be physically incorporated within the same IC chip as processor means **402.**

As will be understood by those skilled in the art, some or all of the electronic storage medium **404** may store a plurality of device profiles, where each device profile comprises a formatting protocol for formatting voice commands in conformity with a protocol used by a particular smart appliance, may store a plurality of wake-words and/or voice commands which may be associated with one or more device profiles. For example, a first device profile may specify the format of one or more digital signals for voice operation of TV **106,** e.g., to cause TV **106** to change channels, input, volume, etc., while a second device profile may specify the format of one or more digital signals for voice operation of STB **108,** e.g., to change channels, control volume, etc.

The communication interface **406** comprises one or more data interface circuitry, such as well-known Ethernet, Wi-Fi, RF4CE, Bluetooth, or USB circuitry, that allows wireless communication between the controlling device **202,** and the smart appliances, and in some embodiments, between the controlling device **202** and wireless router **114** for communication therewith and the server **208,** via the wide-area network **216.** In one embodiment, the communication interface **406** comprises one or more data interface circuitry, such as at least one transceiver **410** and at least one transmitter **412,** that allows communication between coupled smart appliances. In this embodiment, a transceiver **410** may support a first wireless protocol which is used to communicate with a first smart appliance and a second transceiver **410** may support a second wireless protocol which is used to communicate with a second smart appliance for providing formatted voice data to each of the smart appliances.

The user interface **408** comprises a user input device, for allowing a user to control operations of the controlling device **202.** The user input typically comprises at least one or more soft keys or mechanical keys for allowing a user to enter commands or information into the controlling device **202.** In one example, user interface **408** comprises a microphone coupled to processor **402** for receiving a user's voice commands and converting the voice commands into electronic signals, as is well-known in the art.

It should be understood that the functional blocks may be coupled to one another in a variety of ways other than which is shown in Figure **4** and that not all functional blocks necessary for operation of controlling device **202** are shown, such as a power supply, a microphone, one or more accelerometers, a multiple-axis gyroscope, a variety of other transceivers and transmitters each comprising a different wireless protocol, for purposes of clarity.

Figure **5** illustrates a functional block diagram **500** of one example of a smart appliance, such as the TV **106,** STB **108,** an Apple TV brand streamer **110** (each as shown in Figure **1**), an Xbox brand gaming system **204** and a Roku brand streamer **206** (each as shown in Figure **2**). Such smart appliances may be controlled by means of voice commands, may be speaker-independent, i.e. the smart appliances may respond to multiple voices, and may respond to multiple commands at once. In some embodiments, smart appliances may identify and or authenticate the speaker, i.e. the user, via a local operation, and may send the received voice input to a speech processing service **116,** via the wide-area network **216** or via use of a cellular network.

In this example, the smart appliance comprises a processor **502,** an electronic storage medium **504,** a communication interface **506,** a user interface **508** and a transceiver **510.** It should be understood that the functional blocks may be coupled to one another in a variety of ways other than which is shown in Figure **5** and that not all functional blocks necessary for operation of the smart appliance are shown, such as a power supply, a variety of other transceivers and transmitters each comprising a different wireless protocol for purposes of clarity.

The processor **502** is configured to provide general operation of a smart appliance by executing processor-executable instructions stored in the electronic storage medium **504,** for example, executable code. The processor **502** typically comprises a general-purpose microprocessor, such as an Intel Core I7 brand or an AMD K10 brand microprocessor, although any one of a variety of microprocessors, microcomputers and or microcontrollers may be used alternatively, chosen based on factors such as computing power, cost, size, etc.

The electronic storage medium **504** comprises one or more information storage devices such as ROM, RAM, Flash, other type of electronic, optical or mechanical electronic storage medium device, or any combination thereof. Electronic storage medium **504** may be used to store processor-executable instructions for operation of the smart appliance. It will also be appreciated that some or all of the illustrated electronic storage medium may be physically incorporated within the same IC chip as processor means **502.**

As will be understood by those skilled in the art, some or all of the electronic storage medium **504** may store instructions or data that is particular to each type of smart appliance to be controlled. For example, instructions for TV **106** may comprise instructions to receive television programming via the communication interface **506** and display one of the television programs on a display, in accordance with commands received from the controlling device **202.**

Other instructions cause a smart appliance to receive instructions from the controlling device **202,** such as a wake-word or a voice command, where processor **502** uses the voice command to determine a smart appliance identification associated with the voice command. The smart appliance then sends the appliance identification to the controlling device **202** or to a coupled smart appliance via the wide-area network **216.**

Still other instructions cause the smart appliance to receive instructions from the controlling device **202,** which cause processor **502** to initiate a detection process, such as a detect/request the active source / sink / port on the audio-video / communications bus status request, to detect an active HDMI input. The smart appliance then determines a smart appliance connected to the active HDMI input and sends the appliance identification to the controlling device **202** or to a coupled smart appliance. The controlling device **202** or the coupled smart appliance then uses the appliance identification to send the voice command to the identified smart appliance. In some examples, the smart appliance sends the appliance determination to server **208** for determining the contextual command routing. Server **208** then sends the voice command to the identified smart appliance. In another example, server **208** sends the voice command to the smart appliance, that determined which smart appliance was connected to the active HDMI input, for either executing the command or for forwarding the command to the appliance connected to the active HDMI input.

The communication interface **506** comprises one or more data interface circuitry, such as transceiver **510,** Ethernet, Wi-Fi, RF4CE, Bluetooth, or USB circuitry, that allows digital communication, between the smart appliance and other coupled smart appliances, the smart appliance and the controlling device **202,** via a local area network provided by wireless router **114,** as well as between the smart appliance and the server **208,** via the wide-area network **216.** In this embodiment, a transceiver **510** may support a wireless protocol, which is used to receive the voice commands from the controlling device **202,** may decode, compress or perform other operations as necessary to transmit the voice commands to a speech processing service **116.**

The user interface **508** comprises a user input device and/or a user output device, for allowing a user to control operation of the smart appliance. The user input typically comprises one or more pushbuttons, keys, a touchscreen display, etc. for allowing a user to enter commands or information into the smart appliance. The user output device typically comprises a display screen, a touchscreen display, lights, amplified sound bars, etc. for presenting media content to a user as desired/needed.

It should be understood that the functional blocks may be coupled to one another in a variety of ways other than which is shown in Figure **5** and that not all functional blocks necessary for operation of a smart appliance are shown, such as a power supply, a variety of other transceivers and transmitters each comprising a different wireless protocol, for purposes of clarity.

Figure **6** is a flow diagram of one example method for enabling voice control of two or more smart appliances. The method is implemented by processor **402** located within controlling device **202,** by executing processor-executable instructions stored in electronic storage medium **404.** It should be understood that in some examples, not all of the steps shown in Figure **6** are performed and that the order in which the steps are carried out may be different. It should be further understood that some minor method steps, which would be known to those of ordinary skill in the art, have been omitted for purposes of clarity.

At block **600,** a user of controlling device **202** utters a voice command into controlling device **202,** via user interface **408.** In one example, the user first presses a key on controlling device **202** in order to activate a microphone on controlling device **202.**

At block **602,** the voice command is received by processor **402** via user interface **408** and typically stores the voice command in electronic storage medium **404.**

At block **604,** processor **402** determines to which smart appliance the voice command is intended. In one example, processor **402** evaluates the voice command and determines that the voice command is intended for a particular smart appliance, in this example, TV **106.** The determination operation is performed in accordance with one or more of the examples described above.

In another example, processor **402** transmits the voice command in a predetermined format for reception by a predetermined one of the smart appliances. In this example, processor **402** is pre-configured to communicate with one of the smart appliances and transmits the voice command in a format understood by the predetermined smart appliance. The predetermined smart appliance may be different than the smart appliance for which the voice command was intended. The predetermined smart appliance receives the voice command and then forwards it to remote server **208.** Remote server **208,** in turn, processes the voice command, to determine an identification of a smart appliance type or a particular smart appliance for which the voice command was intended. For example, server **208** can interpret the voice command and extract one of a number of predetermined commands, such as "volume up," "volume down," "change channel," "TV on (off)," "Roku on (off)," etc. Based on the interpretation, server **208** identifies at least a smart appliance type that the voice command was intended. For some voice commands, such as "TV on (off)," "Roku on (off)," where an identification of a particular smart appliance is contained within the voice command, determination of the intended smart appliance is simply a matter of interpreting the voice command to extract the mentioned smart appliance. In other voice commands, such as "volume up," "volume down," or "change channel," server **208** may identify key words in the voice command and determine a likely intended smart appliance by associating the key words with smart appliance types stored by server **208.** For example, if server **208** determines that the word "volume" was uttered, server **208** may determine that the voice command was intended either for TV **106** or for set-top box **110.** Server **208** then returns an identification of the intended smart appliance to remote controlling device **202,** either directly via wireless router **114** or via a predetermined smart appliance.

At block **606,** the controlling device **202** receives the identification of the intended smart appliance from server **208,** via transceiver **410,** which provides the identification to processor **402.**

At block **608,** processor **202** receives the identification and may determine a particular smart appliance for which the voice command was intended based on the smart appliance identification type. For example, server **208** may have identified a TV for which the voice command was intended. Processor **402** then determines a particular brand and/or model of TV in use, and operational capabilities, such as voice command, wake-word, preinstalled apps, content being watched, supported wireless protocols, user preferences, etc., based on and earlier provisioning process.

The provisioning process comprises sending signals to the discovered smart appliances that causes the other smart appliances to provide their device information, such as EDID, CEC, vendor name, device type, device status, installed apps, current media content being played on the device, media content logos, Infoframe, SSDP, MDNC, IP mDNS Service List, supported wireless protocols such as VoIP, IP, Smart Wave (S-WAVE), Wi-Fi, Bluetooth low energy (BLE), RF4CE, ZigBee, Z wave, Infra-red, etc., to the requesting one or more smart appliances. For example, the provisioning process may be used to determine smart appliances comprising the same operational capabilities. For such devices, the user may prefer to watch a TV program on a particular smart appliance and set the user preferences accordingly. In this embodiment, the user preferences are aggregated to the device profiles. Further details of such device detection may be found in U.S. Patent Nos. 8,812,629, 8,558,676, 8,659,400, 8,830,074, 8,896,413, 9,215,394, 9,437,105, 9,449,500 and 9,019,435

At block **610,** processor **402** formats the voice command stored in electronic storage medium **404** into a data format in accordance with the formatting protocol associated with the identified smart appliance.

At block **612,** processor **402** transmits the formatted voice command to the identified smart appliance via transmitter/transceiver **410** and or **412.** The formatting protocol used to format the voice command may additionally comprise a transmission protocol in which to transmit data. For example, a formatting protocol stored within electronic storage medium **404** in association with TV **106** may indicate that wireless data needs to be transmitted via an RF4CE transmitter. In this case, processor **402** routes the formatted voice command to an RF4CE transmitter and causes the RF4CE transmitter to transmit the formatted voice command to TV **106.**

The device profile, as partially described in Figure **2****,** comprises the entirety of the smart appliance information such as the data identified during the provisioning process performed by a smart appliance which data typically comprises the smart appliance's metadata, attributes, preferences as set by the user, a formatting protocol for formatting voice commands in conformity with a protocol used by a particular smart appliance, supported network or communication protocols, voice command code structure or format, voice service or operational capabilities, state information, etc., for a plurality of smart appliances, which may be stored in database **210** and accessible by server **208.**

These commands and operational capabilities define the set of "verbs" and "grammars" that can be correlated to this appliance.

In one example, the TV **106,** in response to receiving the device profiles from server **208,** may send, via the communication interface **506,** the device profiles to a second coupled smart appliance for use in configuration of a controlling device **202** and wherein the device profiles are in a format used by the second smart appliance. For example, a first smart appliance may send the device profiles received from server **208** to a second smart appliance, acting as an intermediary device, or may send one or more of the device profiles to the controlling device **202** for storing in the electronic storage medium **404.**

In yet another example, the device profiles are provided to the controlling device **202** by a cloud service **302,** via use of a wide-area network **216.** The controlling device **202** may then store the device profiles locally in electronic storage medium **404.**

In one example, the device profile may be received by processor **402,** in raw format, may be restructured, by processor **402,** to a particular data structure by executing readable code comprising a set of procedures for creating the data structure. In one example, the data structure is an array. In another example, the data structure is a list. In yet another example, the data structure is a combination of one or more data types as needed for the processor **402** to perform a data restructuring operation.

In another example, the processor **402,** may perform a local operation to cross-reference the discovered appliance information to the appliance metadata, stored in the electronic storage medium **404** or via a cross-referencing operation performed in cooperation with server **208** for each identified smart appliance. In this example, server **208** determines information, via use of database **210,** which equals or resembles the appliance information of an analogous smart appliance in some respect for the purpose of generating, or aggregating data to, a device profile or device fingerprint. The appliance metadata comprises smart appliance attributes, such as EDID, CEC, device type, features supported, etc., which may be complementary to the discovered appliance information and typically includes a plurality of other appliance related information, such as cloud based appliance services, such as services which are made available by the appliance's manufacturer, associated voice processing service, capabilities, preferred communication method, supported network or communication protocols, command code structure or format, etc., for a plurality of smart appliances.

Additionally, the device profile may comprise a signal of an identical structure to the signal sent by the original remote control of the smart appliance, (e.g., a Comcast brand Xfinity voice remote **102** to operate a Comcast brand, STB **108,** or an Apple brand Siri voice remote **104** to operate an Apple TV brand streamer **110** (each as shown in Figure **1****),** for sending voice commands to the smart appliances, and the signal may be sent by a controlling device **202,** via communication interface **406,** to a first coupled smart appliance, via a signal that resembles the signal of the original remote control from the same smart appliance manufacturer. Similarly, the controlling device **202** may send a different signal to a second smart appliance, via use of a signal that resembles the signal of the original remote control associated with the second smart appliance.

In another example, the processor **402,** may dynamically generate a device profile in real-time, via use of the discovered appliance information and/or via performing an on-line search, via communication interface **406** and via use of wide-area network **216,** to obtain related smart appliance metadata, such as from the internet or other cloud based servers. When the operation is complete, the device profile may be stored in the electronic storage medium **404,** or may be stored in the electronic storage medium of a coupled server or cloud service **302.**

In another example, the device profiles are provisioned to TV **106,** comprising UCE **200,** by server **208,** via communication interface **506,** or are provisioned by a cloud service **302,** via use of a wide area network **216,** to TV **106.**

In any of the examples, each device profile comprises a formatting protocol for formatting voice commands in conformity with a protocol used by a particular smart appliance and the functionality for gathering the identification of smart appliances information from smart appliances located at an end-user's home may be performed by a Universal Control Engine (UCE) **200** as described in U.S. Patent No. 9,215,394 In one example, when a smart appliance, comprising a UCE **200** is initially powered on, an automatic provisioning process may be initiated for identifying or detecting smart appliances on the same local network as the smart appliance containing the UCE **200.** Alternatively, the provisioning process may be initiated by a key press on the controlling device **202** or via a voice command recognized and acted on by the smart appliance. Such a provisioning process is described in U.S. Patent No. 9,307,178

In one example, the controlling device **202,** comprises an electronic storage medium **404** having processor-readable code embodied therein and storing a plurality of smart appliance profiles where each device profile comprises a formatting protocol for formatting voice commands in conformity with a protocol used by a particular smart appliance and where the device profiles are provisioned to the smart appliance by server **208.** In this example, the controlling device **202,** receives, via a microphone, a first voice command from an end user, which is used by the controlling device **202** to determine a first smart appliance to which the first voice command is intended. The controlling device **202** then identifies a first formatting protocol, in the electronic storage medium associated with the first smart appliance, formats the voice command into a formatted voice command in conformance with the first formatting protocol and sends the formatted voice command to the first smart appliance.

For example, the user may press the microphone key and utter one or more words or sounds for selecting a particular smart appliance, such as the Apple TV brand streamer **110.** The controlling device **202,** determines the device profile associated with that smart appliance based on the voice command, and identifies the proper signal or protocol to use for communicating with the Apple TV brand streamer **110.** The controlling device **202** formats the voice command into an identical voice command of the Apple brand Siri voice remote **104.** The controlling device **202** then sends the voice command to the Apple TV brand streamer **110.** The controlling device **202** receives a second voice command and similarly determines a second smart appliance, such as STB **108,** to which the second voice command is intended. The controlling device **202** then sends the formatted voice data to the STB **108.** In some examples, a device profile comprises a definition of how to send voice to the smart appliance and the controlling device **202** may perform a local operation to determine which smart appliance is associated with the voice command and may determine one or more methods of how to send the voice command.

In one example the controlling device **202,** may listen for a voice command and when the voice command is received, the controlling device **202** sends a request to a smart appliance to perform a local operation to scan the local-area network for connected smart appliances and to dynamically query each smart appliance for state information. Such state information comprises apps installed and/or supported, power state of a smart appliance (i.e. On/Off), current media state such as playing a particular song or watching a particular video stream, supported commands and /or scripts, etc. In some examples, the state information may be used by the smart appliance which performed the query or by server **208** for defining the context for the commands.

In one example, state information may be obtained by a first smart appliance performing a signal sniffing operation, such as an audio signal listening operation, to determine a media that is currently playing in a specific location. In this example, the smart appliance contains the necessary hardware and programming to perform said signal sniffing operation. Signal sniffing operations are well known in the art and are not described herein.

In one example, the smart appliance receives codes or scripts for the connected smart appliances from server **208,** coupled to database **210** where database **210** comprises a plurality of smart appliance codes and/or scripts for use in communicating with connected smart appliances and where the codes and/or scripts are used to identify context and the intended smart appliance. For example, when a user utters "Pause," contextually server **208** will provide priority to a smart appliance which is currently playing a song.

For example, TV **106** may initiate a query to one or more smart appliances such as STB **108** and Apple TV brand streamer **110** where each smart appliance sends, in real-time, information to TV **106,** related to what activity is being performed on each smart appliance. Such activity information may comprise available current media content such as a TV show or movie being watched on the Apple TV brand streamer **110,** photos being viewed, active apps and their displayed content on STB **108,** supported commands, and may include information such as an identification of a last user action or command that was performed by each smart appliance. In some examples, the activity information may be displayed partly or in full on a display coupled to the smart appliance or may be provisioned by a first smart appliance to a second smart appliance for displaying the information.

In another example, the activity information may be displayed in a display coupled to the controlling device **202,** where the activity information contains activable links which when activated by a user, via use of an app installed on controlling device **202,** cause the smart appliance to perform the corresponding command such as "Play," "Stop," etc.

In another example, a controlling device **202** receives configuration information from a remote server **208,** using an identification of a smart appliance from a plurality of coupled smart appliances. For example, server **208** receives an identification of a plurality of smart appliances located at an end user's home from TV **106.** In this example, one or more of the smart appliances performs an operation to detect other connected smart appliances and provisions that information to the remote server **208.** The server **208,** in turn, analyzes the information to determine a device profile for each of the detected smart appliances. The server **208** stores the device profile for each of the detected smart appliances in a database **210** and directly sends the device profiles for each of the detected smart appliances to the controlling device **202.** In some examples, a device profile comprises one or more supported commands and operational capabilities which define the set of verbs and grammar that are correlated to a smart appliance and may comprise a second definition of how to send voice to the smart appliance.

In yet another example, a controlling device **202** receives configuration information from a cloud service **302,** via a wide-area network **216.** In this example, one or more of the smart appliances performs an operation to detect other connected smart appliances and provisions that information to the cloud service **302.** The cloud service **302,** in turn, analyzes the information to determine a device profile for each of the detected smart appliances. The cloud service **302** then sends the device profiles for each of the detected smart appliances to the controlling device **202.**

In another example, a device having a microphone receives and sends a voice command to the controlling device **202,** such as an Echo or to a similar type of smart appliance, which is coupled to a voice-controlled intelligent personal assistant service, such as Amazon brand Alexa brand device, which uses itself as a home automation hub, and which is communicatively coupled to a speech processing service **116,** a cloud service **302** or to server **208.** In this example, the controlling device **202** sends the voice command to the Echo imitating the signal of the Amazon brand Alexa brand voice remote control. The Echo sends the voice command to the Alexa brand service, where the Alexa brand service, in a cooperative process with server **208** and a cloud service **302,** such as IFTTT, provision the IFTTT service for automating one or more predefined IFTTT operations which cause the one or more predefined operations to be sent by the IFTTT service to one or more smart appliances, such as TV **106,** which are coupled, via use of the UCE **200,** to the IFTTT service. The one or more operations are received by TV **106,** via communication interface **506,** for performing the particular operations, by processor **502.** Such operations may be prepopulated at the cloud service **302,** may be prepopulated in the controlling device **202,** via an app associated with the IFTTT service and/or may be populated during the set-up of the IFTTT service associated with the Alexa service and TV **106.** IFTTT services and operations are well known by one skilled in the art and are not described herein

For example, if a user utters the words, "Alexa I want to play Xbox," the controlling device **202** determines that the user desires to use the Echo based on the voice command, and identifies the proper signal or protocol to use for communicating with the Echo. The Echo then sends the voice command to the Alexa brand service, which is coupled to a cloud service **302,** such as the IFTTT service or to a similar service. The IFTTT service determines the predefined operations, via use of an applet or a recipe, to provision the determined operations to server **208,** via the internet. Server **208** receives the one or more operations, via the internet, from the IFTTT service to provision, by processor **502,** TV **106.** TV **106** receives the operations, via communication interface **506,** and processor **502** executes the one or more received operations.

For example, the words, "Alexa I want to play Xbox", may be a predefined phrase or a series of predefined operations which are associated with the IFTTT service and which are associated with a cloud service **302.** Such operations may comprise automatically changing the HDMI input at TV **106,** powering on the Xbox brand gaming system **204,** setting the volume to a predetermined level, dimming the lights to a predetermined level, etc. The one or more operations may be in the structure of one or more IFTTT applets, which may be consolidated into a single work flow, for having multiple operations execute simultaneously or the operations may be executed at a predetermined time interval. It is to be understood that, unless otherwise stated to the contrary, one or more of the described operations may be received and/or executed by **TV106** or may be received and/or executed by one or more coupled smart appliances.

It is to be understood that the controlling device **202,** as shown, Figure 2 may include a plurality of other functions such as motion sensor-enabled capabilities, hand-gesture recognition and may include the capability to display images, such as logos, alphanumeric text, etc. Such controlling devices may cooperate with one or more apps, as shown in Figure **3****,** to control a smart appliance. Furthermore, the controlling device **202,** may cooperate with one or more smart appliances each comprising a computing client, such as in a client-server-model to provision and/or to control a smart appliance. In some examples, a microphone is coupled to one or more devices each located in a different room of the user's home and where the device having the microphone is coupled to the controlling device **202,** via a local-area network or a wide-area network **216,** for sending the voice commands to the controlling device **202.**

In some instances, as shown in Fig. 7 and 8, the speech processing service associated with the controlling device **202,** whether resident on the device itself, provided by an internet cloud based processing service, or the like, may perform a loudness analysis to determine a loudness of any speech that is being provided to the controlling device **202** and/or a loudness of an environment in which the controlling device **202** is operating, i.e., the loudness of any background noise. By way of non-limiting example, the loudness sensing components and functionality described in U.S. Patent No. 9,847,096 can be used for this purpose. In this manner, a loudness analysis can be performed to determine a loudness estimation indicative of a level of the controlling speech input and/or background noise received with the controlling speech input. Based upon the loudness estimation, as compared to a predetermined threshold established by calibrating the controlling device **202,** by activating the microphone under certain noise conditions and/or by speaking one or more commands in a normal voice - which thresholds may be an absolute value or established as a range), the system can determine that the controlling speech input is being provided loudly (e.g., the loudness estimation of the controlling speech input is greater that a predetermined speech input threshold), that the controlling speech input is being provided softly (e.g., the loudness estimation of the controlling speech input is less that a predetermined speech input threshold), that the controlling speech input is being provided normally (e.g., the loudness estimation of the controlling speech input is within a predetermined speech input threshold), the environment is loud (e.g., the loudness estimation of the environment is greater that a predetermined environment threshold), that the environment is quite (e.g., the loudness estimation of the environment is less that a predetermined environment threshold), and/or that the environment is normal (e.g., the loudness estimation of the environment is within a predetermined environment threshold).

Using such determined loudness information, it is contemplated that the controlling device **202** can be further adapted to perform additional functions. For example, when the controlling device **202** includes a speaker for outputting information, playing music, or the like (as described in U.S. Application No. 15/799,393), the controlling device **202** can use a loudness determination to automatically adjust the level at which the information, music, or the like is caused to be output via the speaker. In this regard, the controlling device **202** may automatically raise the level at which information, music, or the like is caused to be output via the speaker when it is determined that the environment is (or is getting) loud (preferably whereby the DB output of the speaker is marginally raised so the audience can hear the output properly considering the noise level in the environment), may lower the level at which information, music, or the like is caused to be output via the speaker when it is determined that the environment is (or is getting) quite, may automatically raise the level at which information, music, or the like is caused to be output via the speaker when it is determined that the speaker has raised (or is raising) their voice, may automatically lower the level at which information, music, or the like is caused to be output via the speaker when it is determined that the speaker has lowered (or is lowering) their voice, etc.

It is also contemplated that this determined loudness information can be used by the system to automatically cause one or more commands to be issued for the purpose of controlling a loudness level associated with the environment. For example, when it is determined that the environment is (or is getting) loud while the user is attempting to provide speech to the controlling device **202,** the system may attempt to lower the noise being generated by the environment by sending one or more commands, whether voice commands or conventional remote control commands, to one or more controlled devices. In this manner, the system can be used to automatically send a command to a sound source, e.g., a television, to mute, power off, or otherwise reduce the output volume level of the sound source when it is determined that the environment is (or is getting) loud. This control can be performed as soon as the controlling device **202** hears a device activating or triggering keyword which has the advantage of reducing the noise being generated by the environment prior to the user speaking a command as command input generally requires better sound quality for the system to understand the command. Furthermore, the particular device to be controlled in this manner can be automatically determined by the system based upon system state information. Thus, if the system knows based upon the state information received from the system that the TV is currently on, the system can automatically select the TV as the device to be controlled. Similarly, it the system knows that the controlled device **202** was last used to turn on the TV, to control volume of the TV, etc., the system can deduce (for example, when not capable of actually receiving state information from connected devices) that the TV is the device generating the sound and can automatically select the TV as the device to be controlled. As noted, the control of the selected device or devices can be performed by the system using any of the control procedures that have been described herein, alone or in combination. It will also be understood that, if desired, the controlled device can be automatically returned to a given state (e.g., powered back on, unmuted, volume raised) by the system when the system determines that no further speech communications are likely to be issued by the user, for example, after the passing of a predetermined amount of time since the last command was received, the last received command is indicative of a complete request meaning no further speech input is expected within a given amount of time, etc. Furthermore, in the event that the device does not receive a recognizable command within a predetermined period of time after receiving the trigger command and after once causing a command to be sent to reduce the sound level of the controllable device, the system can function to automatically cause one or more further commands to be issued to reduce the sound level of the controllable device until such time as a speech input command is received and recognized, a time limit has expired (upon which the controllable device may be caused to be returned to its original state), or the like.

It will also be understood that additional conditions can be utilized to adaptively change how the system will respond to user commands and queries or otherwise output sound. For example, contextual parameters such as the time of day can be used to automatically identify modes such as night time/sleep time whereby the output audio levels of the controlling device **202** can be adjusted or be inhibited from adjusting accordingly. Likewise, different loudness thresholds can be established for different times of day or the like for use as described above.

In further circumstances, the determined loudness level of the speaker and/or of the environment can also factor in a measure of a distance between the audio source and the controlling device **202** to provide improved flexibility in responding to commands, etc. For example, if a speaker command does not sound loud, but the speaker is measured as being close to the controlling device **202,** the determined loudness level can indicate that the user is whispering. If, however, the speaker command does not sound loud, but the speaker is measured as being far removed from the controlling device **202,** the determined loudness level can indicate that the user is talking normally or shouting. Thus, in such instances, the determined loudness level is the sound level as determined by the system as described above increased or decreased as a factor of the measured distance to the audio source.

For use in adjusting the determined loudness level an absolute and/or relative distance is utilized. To this end, a camera, image sensor, light sensor, or the like provided to the controlling device **202** can be utilized to determine exactly (or approximately) how far away from the controlling device **202** the speaker is located and/or if the speaker has moved relatively closer to or away from the controlling device **202** when speaking commands. Likewise, the measure of the distance can be done using a microphone array, which would be comprised of two or more microphones. Yet further, a single microphone with some level of processing can also be used to estimate the speaker distance. Of course, other known devices useful to measure a distance between objects, such as those found in laser measuring devices or the like, can be provided to the controlling device **202** for use in this purpose.

It will also be appreciated that the measured distance to a command speaker can likewise be used to adjust a loudness level of any output that may be generated by the controlling device **202** to thereby ensure that a response is output at an appropriate level, e.g., at a level sufficient to be heard by a distant intended recipient or at a lower level so as not to overwhelm a close intended recipient.

While described as a microphone for receiving voice commands, it is to be understood that a microphone includes any transducer type device that converts sound into an electrical signal and may include one or more microphones in each device and each device may be coupled to each other, to the controlling device **202** and to a smart appliance.

While described as an active HDMI input, it is to be understood that an active input includes any active source / sink / port on the audio-video / communications bus status either wired or wirelessly connected to the smart appliance which initiated the status request.

It is also to be understood that a controlling device **202,** may be partially configured at a factory with one or more device profiles preinstalled. When initially powered on, the controlling device **202,** may be configured to automatically communicate with a predetermined smart appliance, such as STB **108,** such as when the controlling device **202** and the STB **108** are paired with each other out of the-box. Similarly, an automatic pairing operation may be performed when the end user presses a first key, on the controlling device **202,** for initiating a communication with said STB **108.**

While various concepts have been described in detail, it will be appreciated by those skilled in the art that various modifications and alternatives to those concepts could be developed in light of the overall teachings of the disclosure. Further, while described in the context of functional modules and illustrated using block diagram format, it is to be understood that, unless otherwise stated to the contrary, one or more of the described functions and/or features may be integrated in a single physical device and/or a software module, or one or more functions and/or features may be implemented in separate physical devices or software modules. It will also be appreciated that a detailed discussion of the actual implementation of each module is not necessary for an enabling understanding of the invention. Rather, the actual implementation of such modules would be well within the routine skill of an engineer, given the disclosure herein of the attributes, functionality, and inter-relationship of the various functional modules in the system. Therefore, a person skilled in the art, applying ordinary skill, will be able to practice the invention set forth in the claims without undue experimentation. It will be additionally appreciated that the particular concepts disclosed are meant to be illustrative only.

## Claims

1. A method for controlling a controllable appliance resident in an environment which includes a controlling device (202) adapted to receive speech input to control the controllable appliance (106, 108, 204, 206, 110), comprising:
establishing a noise threshold for the environment in which the device is operating by calibrating the controlling device (202) by activating the microphone under certain noise conditions;
receiving at the controlling device (202) a speech input;
determining a noise level for the environment at the time the speech input is received by the controlling device (202);
comparing the determined noise level to the established noise threshold;
when the comparison indicates that the determined noise level for the environment is greater than the established noise threshold for the environment, causing one or more commands to be automatically issued to the controllable appliance (106, 108, 204, 206, 110) from the controlling device (202) to thereby cause the controllable appliance (106, 108, 204, 206, 110) to transition from a first state having a first volume level to a second state having a second volume level that is less than the first volume level; and
establishing a speech input threshold for the controlling device (202), determining a speech level for the received speech input, comparing the determined speech level with the speech input threshold, and
when the comparison indicates that the determined speech input level is greater than the established speech input threshold, causing one or more outputs generated in response to the speech input to be provided at a first volume level that is more than a normally used output level, and
when the comparison indicates that the determined speech input level is lower than the established speech input threshold, causing one or more outputs generated in response to the speech input to be provided at a first volume level that is less than a normally used output level,
wherein a measured distance to a source of the speech input is utilized to increase or decrease the speech level for the received speech input.

2. The method as recited in claim 1, wherein the controlling device (202) is adapted to support remote control functionality and wherein the one or more commands are caused to transmitted to the controllable appliance (106, 108, 204, 206, 110) directly by the controlling device (202).

3. The method as recited in claim 2, wherein the one or more commands comprises a volume mute command, one or more volume down commands or a power off command.

4. The method as recited in claim 1, comprising determining that further speech input has not been received by the controlling device (202) within a predetermined period of time subsequent to the speech input being received and, in response, causing one or more commands to be automatically issued to the controllable appliance (106, 108, 204, 206, 110) to thereby cause the controllable appliance (106, 108, 204, 206, 110) to transition from the second state back to the first state.

5. The method as recited in claim 4, wherein the device is adapted to support remote control functionality and wherein the one or more commands for transitioning the controllable appliance (106, 108, 204, 206, 110) from the first state to the second state and for transitioning the controllable appliance (106, 108, 204, 206, 110) from the second state back to the first state are all caused to transmitted to the controllable appliance (106, 108, 204, 206, 110) directly by the controlling device (202).

6. The method as recited in claim 1, comprising determining that no further speech input is expected to be received by the controlling device (202) within a predetermined period of time subsequent to the speech input being received and, in response, causing one or more commands to be automatically issued to the controllable appliance (106, 108, 204, 206, 110) to thereby cause the controllable appliance to transition from the second state back to the first state.

7. The method as recited in claim 6, wherein the controlling device (202) is adapted to support remote control functionality and wherein the one or more commands for transitioning the controllable appliance (106, 108, 204, 206, 110) from the first state to the second state and for transitioning the controllable appliance (106, 108, 204, 206, 110) from the second state back to the first state are all caused to be transmitted to the controllable appliance (106, 108, 204, 206, 110) directly by the controlling device (202).

8. The method as recited in claim 1, further comprising using a known operating state of the controllable appliance to determine if one or more commands are to be automatically issued to the controllable appliance (106, 108, 204, 206, 110) to thereby cause the controllable appliance (106, 108, 204, 206, 110) to transition from a first state having a first volume level to a second state having a second volume level that is less than the first volume level.

9. The method as recited in claim 1, further comprising using a derived operating state of the controllable appliance to determine if one or more commands are to be automatically issued to the controllable appliance (106, 108, 204, 206, 110) to thereby cause the controllable appliance (106, 108, 204, 206, 110) to transition from a first state having a first volume level to a second state having a second volume level that is less than the first volume level.

10. The method as recited in claim 10, wherein the controlling device (202) comprises a speaker for outputting the one or more outputs generated in response to the speech input.

11. The method as recited in claim 1, comprising associating a time of day with the established noise threshold and comparing the determined noise level to the established noise threshold only when the received speech input is received during the time of day.

12. The method as recited in claim 1, wherein the controlling device (202) comprises a remote control application, wherein the remote control application is provisioned with a command code set appropriate for commanding functional operations of the controllable appliance (106, 108, 204, 206, 110), and wherein the controlling device (202) uses the provisioned command code set to cause one or more commands to be automatically issued to the controllable appliance (106, 108, 204, 206, 110) via use of a transmitter associated with the controlling device (202) to thereby cause the controllable appliance (106, 108, 204, 206, 110) to transition from a first state having a first volume level to a second state having a second volume level that is less than the first volume level.

13. The method as recited in claim 1, wherein the controlling device (202) comprises a voice control application, wherein the voice control application is provisioned with at least one protocol for use in transmitting voice commands to at least one further device adapted to receive speech input, and wherein the controlling device (202) uses the provisioned protocol to cause one or more voice commands to be automatically issued to the at least one further device via use of a transmitter associated with the controlling device (202) to cause the controllable appliance (106, 108, 204, 206, 110) to transition from a first state having a first volume level to a second state having a second volume level that is less than the first volume level, wherein the controllable appliance (106, 108, 204, 206, 110), optionally, comprises the further device.

## Patentansprüche

1. Verfahren zum Steuern eines steuerbaren Gerätes, das sich in einer Umgebung befindet, die eine Steuervorrichtung (202) einschließt, die angepasst ist, um Spracheingaben zu empfangen, um das steuerbare Gerät (106, 108, 204, 206, 110) zu steuern, umfassend:
Festsetzen eines Geräuschschwellenwerts für die Umgebung, in der die Vorrichtung betrieben wird, durch Kalibrieren der Steuervorrichtung (202) durch Aktivieren des Mikrofons unter bestimmten Geräuschbedingungen;
Empfangen einer Spracheingabe an der Steuervorrichtung (202);
Bestimmen eines Geräuschpegels für die Umgebung zu dem Zeitpunkt, zu dem die Spracheingabe von der Steuervorrichtung (202) empfangen wird;
Vergleichen des bestimmten Geräuschpegels mit dem festgesetzten Geräuschschwellenwert;
wenn der Vergleich ergibt, dass der bestimmte Geräuschpegel für die Umgebung größer ist als der festgesetzte Geräuschschwellenwert für die Umgebung, Veranlassen, dass ein oder mehrere Befehle automatisch an das steuerbare Gerät (106, 108, 204, 206, 110) von der Steuervorrichtung (202) herausgegeben werden, um dadurch zu veranlassen, dass das steuerbare Gerät (106, 108, 204, 206, 110) von einem ersten Zustand, der einen ersten Lautstärkepegel aufweist, in einen zweiten Zustand, der einen zweiten Lautstärkepegel aufweist, der geringer ist als der erste Lautstärkepegel, übergeht; und
Festsetzen eines Spracheingabeschwellenwerts für die Steuervorrichtung (202), Bestimmen eines Sprachpegels für die empfangene Spracheingabe, Vergleichen des bestimmten Sprachpegels mit dem Spracheingabeschwellenwert, und
wenn der Vergleich ergibt, dass der bestimmte Spracheingabepegel größer ist als der festgelegte Spracheingabeschwellenwert, Veranlassen, dass eine oder mehrere als Reaktion auf die Spracheingabe erzeugte Ausgaben mit einem ersten Lautstärkepegel bereitgestellt werden, der größer ist als ein normalerweise verwendeter Ausgabepegel, und
wenn der Vergleich ergibt, dass der bestimmte Spracheingabelautstärkepegel niedriger ist als der festgesetzte Spracheingabe-Schwellenwert, Veranlassen, dass eine oder mehrere als Reaktion auf die Spracheingabe erzeugte Ausgaben mit einem ersten Lautstärkepegel bereitgestellt werden, der niedriger ist als ein normalerweise verwendeter Ausgabepegel,
wobei ein gemessener Abstand zu einer Quelle der Spracheingabe verwendet wird, um den Sprachpegel für die empfangene Spracheingabe zu erhöhen oder zu verringern.

2. Verfahren nach Anspruch 1, wobei die Steuervorrichtung (202) angepasst ist, um eine Fernsteuerfunktion zu unterstützen, und wobei veranlasst wird, dass der eine oder die mehreren Befehle von der Steuervorrichtung (202) direkt an das steuerbare Gerät (106, 108, 204, 206, 110) übertragen werden.

3. Verfahren nach Anspruch 2, wobei der eine oder die mehreren Befehle einen Befehl zum Stummschalten der Lautstärke, einen oder mehrere Befehle zum Verringern der Lautstärke oder einen Befehl zum Ausschalten umfassen.

4. Verfahren nach Anspruch 1, umfassend das Bestimmen, dass innerhalb eines vorbestimmten Zeitraums nach dem Empfang der Spracheingabe keine weitere Spracheingabe von der Steuervorrichtung (202) empfangen wurde, und als Reaktion darauf das Veranlassen, dass ein oder mehrere Befehle automatisch an das steuerbare Gerät (106, 108, 204, 206, 110) herausgegeben werden, um dadurch zu veranlassen, dass das steuerbare Gerät (106, 108, 204, 206, 110) von dem zweiten Zustand zurück in den ersten Zustand übergeht.

5. Verfahren nach Anspruch 4, wobei die Vorrichtung angepasst ist, um eine Fernsteuerfunktion zu unterstützen, und wobei der eine oder die mehreren Befehle zum Übergang des steuerbaren Gerätes (106, 108, 204, 206, 110) von dem ersten Zustand in den zweiten Zustand und zum Übergang des steuerbaren Gerätes (106, 108, 204, 206, 110) von dem zweiten Zustand zurück in den ersten Zustand alle veranlasst werden, direkt von der Steuervorrichtung (202) an das steuerbare Gerät (106, 108, 204, 206, 110) übertragen zu werden.

6. Verfahren nach Anspruch 1, umfassend das Bestimmen, dass innerhalb eines vorbestimmten Zeitraums nach dem Empfang der Spracheingabe nicht erwartet wird, dass eine weitere Spracheingabe von der Steuervorrichtung (202) empfangen wird, und als Reaktion darauf das Veranlassen, dass ein oder mehrere Befehle automatisch an das steuerbare Gerät (106, 108, 204, 206, 110) herausgegeben werden, um dadurch zu veranlassen, dass das steuerbare Gerät von dem zweiten Zustand zurück in den ersten Zustand übergeht.

7. Verfahren nach Anspruch 6, wobei die Steuervorrichtung (202) angepasst ist, um eine Fernsteuerfunktion zu unterstützen, und wobei der eine oder die mehreren Befehle zum Übergang des steuerbaren Gerätes (106, 108, 204, 206, 110) von dem ersten Zustand in den zweiten Zustand und zum Übergang des steuerbaren Gerätes (106, 108, 204, 206, 110) von dem zweiten Zustand zurück in den ersten Zustand alle veranlasst werden, direkt von der Steuervorrichtung (202) an das steuerbare Gerät (106, 108, 204, 206, 110) übertragen zu werden.

8. Verfahren nach Anspruch 1, weiter umfassend das Verwenden eines bekannten Betriebszustands des steuerbaren Gerätes, um zu bestimmen, ob ein oder mehrere Befehle automatisch an das steuerbare Gerät (106, 108, 204, 206, 110) herausgegeben werden sollen, um dadurch zu veranlassen, dass das steuerbare Gerät (106, 108, 204, 206, 110) von einem ersten Zustand, der einen ersten Lautstärkepegel aufweist, in einen zweiten Zustand, der einen zweiten Lautstärkepegel aufweist, der geringer ist als der erste Lautstärkepegel, übergeht.

9. Verfahren nach Anspruch 1, weiter umfassend das Verwenden eines abgeleiteten Betriebszustands des steuerbaren Gerätes, um zu bestimmen, ob ein oder mehrere Befehle automatisch an das steuerbare Gerät (106, 108, 204, 206, 110) herausgegeben werden sollen, um dadurch zu veranlassen, dass das steuerbare Gerät (106, 108, 204, 206, 110) von einem ersten Zustand, der einen ersten Lautstärkepegel aufweist, in einen zweiten Zustand, der einen zweiten Lautstärkepegel aufweist, der geringer ist als der erste Lautstärkepegel, übergeht.

10. Verfahren nach Anspruch 10, wobei die Steuervorrichtung (202) einen Lautsprecher zum Ausgeben der einen oder mehreren Ausgaben umfasst, die als Reaktion auf die Spracheingaben erzeugt werden.

11. Verfahren nach Anspruch 1, umfassend das Zuordnen einer Tageszeit zu dem festgesetzten Geräuschschwellenwert und das Vergleichen des bestimmten Geräuschpegels mit dem festgesetzten Geräuschschwellenwert nur dann, wenn die empfangene Spracheingabe während der Tageszeit empfangen wird.

12. Verfahren nach Anspruch 1, wobei die Steuervorrichtung (202) eine Fernsteueranwendung umfasst, wobei die Fernsteueranwendung mit einem Befehlscodesatz bereitgestellt ist, der zum Befehlen von Funktionsbetrieben des steuerbaren Gerätes (106, 108, 204, 206, 110) geeignet ist, und wobei die Steuervorrichtung (202) den bereitgestellten Befehlscodesatz verwendet, um zu veranlassen, dass ein oder mehrere Befehle automatisch an das steuerbare Gerät (106, 108, 204, 206, 110) über eine Verwendung eines mit der Steuervorrichtung (202) verbundenen Senders herausgegeben werden, um dadurch zu veranlassen, dass das steuerbare Gerät (106, 108, 204, 206, 110) von einem ersten Zustand, der einen ersten Lautstärkepegel aufweist, in einen zweiten Zustand, der einen zweiten Lautstärkepegel aufweist, der geringer ist als der erste Lautstärkepegel, übergeht.

13. Verfahren nach Anspruch 1, wobei die Steuervorrichtung (202) eine Sprachsteueranwendung umfasst, wobei die Sprachsteueranwendung mit mindestens einem Protokoll zur Verwendung bei der Übertragung von Sprachbefehlen an mindestens eine weitere Vorrichtung bereitgestellt ist, das zum Empfangen von Spracheingaben angepasst ist, und wobei die Steuervorrichtung (202) das bereitgestellte Protokoll verwendet, um zu veranlassen, dass ein oder mehrere Sprachbefehle automatisch an die mindestens eine weitere Vorrichtung über eine Verwendung eines mit der Steuervorrichtung (202) verbundenen Senders herausgegeben werden, um zu veranlassen, dass das steuerbare Gerät (106, 108, 204, 206, 110) von einem ersten Zustand, der einen ersten Lautstärkepegel aufweist, in einen zweiten Zustand, der einen zweiten Lautstärkepegel aufweist, der geringer ist als der erste Lautstärkepegel, übergeht, wobei das steuerbare Gerät (106, 108, 204, 206, 110) optional die weitere Vorrichtung umfasst.

## Revendications

1. Procédé de commande d'un appareil pouvant être commandé résidant dans un environnement qui inclut un dispositif de commande (202) adapté pour recevoir une entrée vocale de manière à commander l'appareil (106, 108, 204, 206, 110) pouvant être commandé, comprenant :
l'établissement d'un seuil de bruit pour l'environnement dans lequel le dispositif est en cours de fonctionnement par l'étalonnage du dispositif de commande (202) par l'activation du microphone dans certaines conditions de bruit ;
la réception, au niveau du dispositif de commande (202), d'une entrée vocale ;
la détermination d'un niveau de bruit pour l'environnement au moment où l'entrée vocale est reçue par le dispositif de commande (202) ;
la comparaison du niveau de bruit déterminé au seuil de bruit établi ;
lorsque la comparaison indique que le niveau de bruit déterminé pour l'environnement est supérieur au seuil de bruit établi pour l'environnement,
le fait d'amener une ou plusieurs commandes à être automatiquement émises, à partir du dispositif de commande (202), à l'appareil (106, 108, 204, 206, 110) pouvant être commandé, pour amener par ce moyen l'appareil (106, 108, 204, 206, 110) pouvant être commandé à passer d'un premier état présentant un premier niveau de volume à un deuxième état présentant un deuxième niveau de volume qui est inférieur au premier niveau de volume ; et
l'établissement d'un seuil d'entrée vocale pour le dispositif de commande (202), la détermination d'un niveau de parole pour l'entrée vocale reçue, la comparaison du niveau de parole déterminé avec le seuil d'entrée vocale, et
lorsque la comparaison indique que le niveau d'entrée vocale déterminé est supérieur au seuil d'entrée vocale établi, le fait d'amener une ou plusieurs sorties générées en réponse à l'entrée vocale à être fournies à un premier niveau de volume qui est supérieur à un niveau de sortie normalement utilisé, et
lorsque la comparaison indique que le niveau d'entrée vocale déterminé est inférieur au seuil d'entrée vocale établi, le fait d'amener une ou plusieurs sorties générées en réponse à l'entrée vocale à être fournies à un premier niveau de volume qui est inférieur à un niveau de sortie normalement utilisé,
dans lequel une distance mesurée jusqu'à une source de l'entrée vocale est utilisée pour augmenter ou diminuer le niveau de parole pour l'entrée vocale reçue.

2. Procédé selon la revendication 1, dans lequel le dispositif de commande (202) est adapté pour supporter une fonctionnalité de télécommande et dans lequel la une ou les plusieurs commandes sont amenées à être transmises à l'appareil (106, 108, 204, 206, 110) pouvant être commandé directement par le dispositif de commande (202).

3. Procédé selon la revendication 2, dans lequel la une ou les plusieurs commandes comprennent une commande de mise en sourdine du volume, une ou plusieurs commandes de diminution du volume ou une commande de mise hors tension.

4. Procédé selon la revendication 1, comprenant la détermination du fait qu'une entrée vocale supplémentaire n'a pas été reçue par le dispositif de commande (202) dans une période de temps prédéterminée postérieure à la réception de l'entrée vocale et, en réponse, le fait d'amener une ou plusieurs commandes à être automatiquement émises à l'appareil (106, 108, 204, 206, 110) pouvant être commandé pour amener par ce moyen l'appareil (106, 108, 204, 206, 110) pouvant être commandé à repasser du deuxième état au premier état.

5. Procédé selon la revendication 4, dans lequel le dispositif est adapté pour supporter une fonctionnalité de télécommande et dans lequel la une ou les plusieurs commandes pour faire passer l'appareil (106, 108, 204, 206, 110) pouvant être commandé du premier état au deuxième état et pour faire repasser l'appareil (106, 108, 204, 206, 110) pouvant être commandé du deuxième état au premier état sont toutes amenées à être transmises à l'appareil (106, 108, 204, 206, 110) pouvant être commandé directement par le dispositif de commande (202).

6. Procédé selon la revendication 1, comprenant la détermination du fait qu'aucune entrée vocale supplémentaire n'est censée être reçue par le dispositif de commande (202) dans une période de temps prédéterminée postérieure à la réception de l'entrée vocale et, en réponse, le fait d'amener une ou plusieurs commandes à être automatiquement émises à l'appareil (106, 108, 204, 206, 110) pouvant être commandé pour amener par ce moyen l'appareil pouvant être commandé à repasser du deuxième état au premier état.

7. Procédé selon la revendication 6, dans lequel le dispositif de commande (202) est adapté pour supporter une fonctionnalité de télécommande et dans lequel la une ou les plusieurs commandes pour faire passer l'appareil (106, 108, 204, 206, 110) pouvant être commandé du premier état au deuxième état et pour faire repasser l'appareil (106, 108, 204, 206, 110) pouvant être commandé du deuxième état au premier état sont toutes amenées à être transmises à l'appareil (106, 108, 204, 206, 110) pouvant être commandé directement par le dispositif de commande (202).

8. Procédé selon la revendication 1, comprenant en outre l'utilisation d'un état de fonctionnement connu de l'appareil pouvant être commandé pour déterminer si une ou plusieurs commandes doivent être automatiquement émises à l'appareil (106, 108, 204, 206, 110) pouvant être commandé pour amener par ce moyen l'appareil (106, 108, 204, 206, 110) pouvant être commandé à passer d'un premier état présentant un premier niveau de volume à un deuxième état présentant un deuxième niveau de volume qui est inférieur au premier niveau de volume.

9. Procédé selon la revendication 1, comprenant en outre l'utilisation d'un état de fonctionnement dérivé de l'appareil pouvant être commandé pour déterminer si une ou plusieurs commandes doivent être automatiquement émises à l'appareil (106, 108, 204, 206, 110) pouvant être commandé pour amener par ce moyen l'appareil (106, 108, 204, 206, 110) pouvant être commandé à passer d'un premier état présentant un premier niveau de volume à un deuxième état présentant un deuxième niveau de volume qui est inférieur au premier niveau de volume.

10. Procédé selon la revendication 10, dans lequel le dispositif de commande (202) comprend un haut-parleur pour délivrer en sortie la une ou les plusieurs sorties générées en réponse à l'entrée vocale.

11. Procédé selon la revendication 1, comprenant l'association d'une heure de la journée au seuil de bruit établi et la comparaison du niveau de bruit déterminé au seuil de bruit établi uniquement lorsque l'entrée vocale reçue est reçue pendant l'heure de la journée.

12. Procédé selon la revendication 1, dans lequel le dispositif de commande (202) comprend une application de télécommande, dans lequel l'application de télécommande est provisionnée avec un ensemble de codes de commande approprié pour commander des opérations fonctionnelles de l'appareil (106, 108, 204, 206, 110) pouvant être commandé, et dans lequel le dispositif de commande (202) utilise l'ensemble de codes de commande provisionné pour amener une ou plusieurs commandes à être automatiquement émises à l'appareil (106, 108, 204, 206, 110) pouvant être commandé par l'intermédiaire de l'utilisation d'un émetteur associé au dispositif de commande (202) pour amener par ce moyen l'appareil (106, 108, 204, 206, 110) pouvant être commandé à passer d'un premier état présentant un premier niveau de volume à un deuxième état présentant un deuxième niveau de volume qui est inférieur au premier niveau de volume.

13. Procédé selon la revendication 1, dans lequel le dispositif de commande (202) comprend une application de commande vocale, dans lequel l'application de commande vocale est provisionnée avec au moins un protocole pour une utilisation dans la transmission de commandes vocales à au moins un dispositif supplémentaire adapté pour recevoir une entrée vocale, et dans lequel le dispositif de commande (202) utilise le protocole provisionné pour amener une ou plusieurs commandes vocales à être automatiquement émises à l'au moins un dispositif supplémentaire par l'intermédiaire de l'utilisation d'un émetteur associé au dispositif de commande (202) pour amener l'appareil (106, 108, 204, 206, 110) pouvant être commandé à passer d'un premier état présentant un premier niveau de volume à un deuxième état présentant un deuxième niveau de volume qui est inférieur au premier niveau de volume, dans lequel l'appareil (106, 108, 204, 206, 110) pouvant être commandé, facultativement, comprend le dispositif supplémentaire.
